# EUROPEAN PATENT APPLICATION

(11) **EP 1 767 509 A1**
(43) Date of publication of application: **28.03.2007**
(21) Application number: 05751351.7
(22) Date of filing: 20.06.2005
(51) Int. Cl.: C05B 13/00, B09B 3/00, C02F 11/10, C05F 15/00

(54) **METHOD AND APPARATUS FOR PRODUCING PHOSPHATE FERTILIZER UTILIZING INCINERATION ASH**

(30) Priority: 21.06.2004 JP 2004182793
(71) Applicant: Sanki Engineering Co., Ltd, Chuo-ku Tokyo 103-8331 (JP)
(72) Inventor: HOMMA, Seiji, 1600023 (JP); IWAI, Yoshihiro, 1000006 (JP); JOZUKA, Tetsuji, 1000006 (JP); KOMATSU, Takashi, 1000006 (JP); TAKAGI, Tadashi, 1000006 (JP)
(74) Representative: Tollett, Ian
(86) International application number: PCT/JP2005/011264
(87) International publication number: WO 2005/123629

(57) **Abstract**

A method and an apparatus for producing stable phosphates by adjusting fluctuation of the content of phosphatic constituents at low cost. Phosphates are produced by adding incinerated ash as the main raw material, sub raw materials including magnesium, calcium and potassium constituents, and reducing agents, heating in a smelting furnace, separating the materials into a molten metal and a liquid slag, and extracting the liquid slag for rapid cooling. The apparatus comprises a means for calculating the fluctuation based on measurement data obtained by analyzing the total phosphatic concentration of incinerated ash of the main raw material, an apparatus for calculating an addition ratio of high phosphatic content in the sub materials, and an apparatus for adding the sub raw materials of high phosphatic content to the main materials depending on the phosphatic concentration determined by the output of the calculating apparatus prior to the melting process of the materials.

## Description

### FIELD OF THE INVENTION

The present invention is related to a method and an apparatus for producing phosphatic fertilizer by use of sludge incinerated ash, sewage, excrement, fecaluria of farm animals, or the like as its materials.

### BACKGROUND OF ART

A method for producing phosphatic fertilizer utilizing sludge incinerated ash has been conventionally proposed. For instance, Japanese Patent Unexamined Publication 2001-80979 discloses a method for producing phosphatic fertilizer whose ingredient is sludge incinerated ash containing a large amount of phosphate elements, comprising a step of preparing mixed materials by adding additives such as magnesium oxide, calcium oxide, or phosphate components to the ingredient, melting said mixed materials, slagging the materials by rapid cooling, and crushing them thereafter. Another method for producing phosphatic fertilizer from sludge incinerated ash is described in Japanese Patent Unexamined Publication 2003-112988. This method comprises steps of heating coke, magnesium oxide, calcium oxide, potassium oxide added to sludge incinerated ash containing a high concentration of phosphate elements in a melting furnace, separating the molten metal and the molten slag into two liquid phases, extracting the liquid slag selectively to a granulated cistern and quenching rapidly, and crushing it into granulated slag having a high content of phosphate elements and from which metal elements have been removed.

Although other methods for producing phosphates from sludge incinerated ash have been proposed, they are similar to the aforementioned patent documents. A producing method of phosphatic fertilizer according to prior arts relies on the expectation that material incinerated ash contains a great deal of phosphatic elements. In other words, using incinerated ash which contains a lower amount of phosphatic elements for producing phosphatic fertilizer is not advantageous. However, content of phosphatic elements (the concentration of total phosphoric acid) are not stable, and change through the year. Other factors such as rain or locality can affect its concentration. Conventional methods for producing phosphates assume that content of phosphatic elements are stable, and a high content of phosphatic additives is added, which results in various citrate soluble phosphatic concentrations in a product. If incinerated ash having less content of phosphatic elements is discarded and only the ash having a high content of phosphatic elements is used due to the reason that a high content of phosphatic additives is expensive, the high-content ash must be separated from the low-content ash. In addition, it causes a problem determining how the incinerated ash having a lower content of phosphate should be handled. Furthermore, another problem is the high cost of phosphatic fertilizer caused by adding expensive phosphate rock or the like to the incinerated ash.

### SUMMARY OF THE INVENTION

The present invention aims at solving the aforementioned problems of conventional methods of producing phosphates utilizing sludge incinerated ash. The object of the present invention is to provide a method and an apparatus for producing phosphates that is safe and has an approximately constant concentration of phosphatic constituents wherein variation of the content of phosphatic constituents is adjusted to produce stable phosphates at an inexpensive cost in such a manner that the content of phosphatic constituents of the main material incinerated ash has been measured, and when the thus measured incinerated ash contains a lower content of phosphatic constituents, not only expensive phosphate rock but also inexpensive wastes containing high phosphatic content material is added and mixed so as to increase the citrate soluble phosphatic concentrations in a product prior to dumping in to a smelting furnace.

That is, the present invention provides a method for producing phosphates comprising the following steps:
adding and smelting the main materials of incinerated ash containing phosphatic concentrations, sub materials including magnesium, calcium and/or potassium constituents, and reducing agents in a smelting furnace at a temperature of 1350 - 1450°C;
separating the materials into a molten metal layer and a liquid slag layer in the smelting furnace so as to drain the liquid slag, and
quickly cooling the liquid slag to produce phosphates, wherein the total phosphatic concentration of the main materials of incinerated ash has been measured prior to addition of the sub materials and the reducing agents so that when the thus measured total phosphatic concentration is lower than a predetermined concentration of a target product, an addition ratio of high phosphatic content can be determined before the smelting process so that a predetermined amount of phosphatic wastes selected from bone meal, fish meal, and poultry manure or phosphate rock is added to the smelting furnace to produce a product having the citrate soluble phosphatic concentration of 6 - 25%.

Furthermore, the present invention provides an apparatus for producing phosphates comprising a step of adding and smelting the main materials of incinerated ash containing phosphatic concentrations, sub materials including magnesium, calcium and/or potassium constituents, and reducing agents in an electrical resistance system smelting furnace; separating the materials into a molten metal and a liquid slag in the smelting furnace to drain the liquid slag, and quickly cooling the liquid slag to produce phosphates, said apparatus comprises:
a means for determining concentration of a target product by determining a total phosphatic concentration of the main material incinerated ash prior to addition of the sub materials;
a means for calculating an addition ratio of a high phosphatic content;
a container storing high phosphatic content material, and
an apparatus for adding high phosphatic content material to the aforementioned materials before the melting process,
wherein if a total phosphatic concentration of said main materials is lower than a predetermined concentration of a target product input by the means for determining concentration, said means can obtain the difference of the concentrations so as to determine an addition ratio of the sub materials.

In order to solve the above problems, the inventor(s) of the invention performed the following experiments and studied the result:

### 1. Annual Fluctuating Research of Constituents of Incinerated Ash

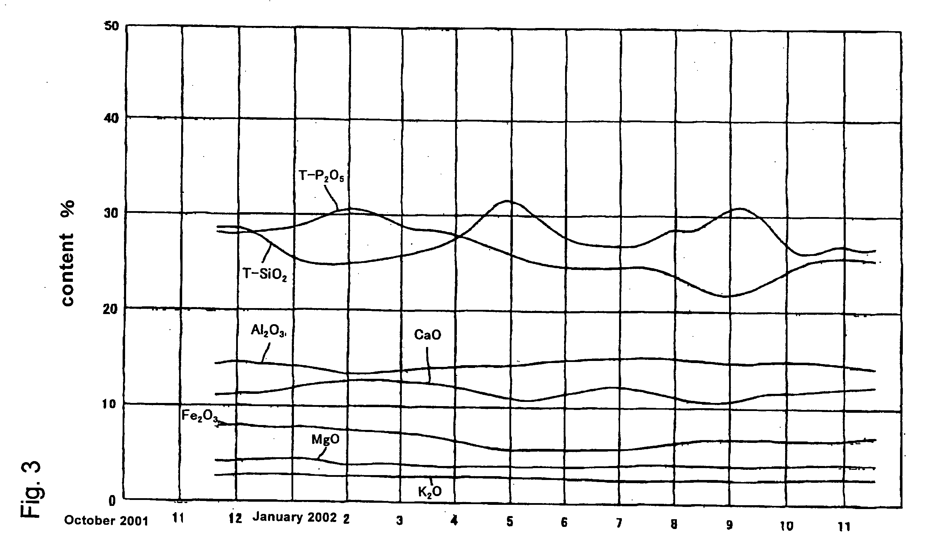

It is known that the composition of sewage sludge incinerated ash varies depending on various factors such as season, treatment plant, or the like. Therefore, the composition of raw material incinerated ash of a predetermined treatment plant was examined twice a month, in particular, with regard to seasonal fluctuation of the concentration of total phosphorus pentaoxide (hereinafter referred to as "phosphoric acid"). As shown in a graph of Fig. 3, the fluctuation of the principal component of raw material incinerated ash was observed throughout the year. According to Fig. 3, a total phosphatic concentration of the incinerated ash (or content of total phosphoric aid, which can be denoted by T - P₂O₅) tends to increase in winter and decrease in summer. Furthermore, the concentration of total silicon oxide (T - SiO₂) increases in May and September. In addition, an inverse correlation was observed between the concentration of total phosphoric acid and the concentration of total silicon oxide. It is assumed that due to a large amount of rain in May and September, soil whose main component is silicon oxide (SiO₂) flows into a sewer with rainwater. Heavy rain due to storm or typhoon is also considered as a factor in reducing the content of total phosphoric acid. Not only Fig. 3, but also research data from Tokyo Sewer Department indicates similar results.

### 2. Annual Fluctuating Research of Constituents of Incinerated Ash

Table 1 indicates the total concentration of each principal component relative to the total phosphatic concentration in incinerated ash, which includes the maximum, the minimum, and the average value thereof. Table 2 indicates the percentage of phosphoric constituents assumed in a product. As apparent from tables 1 and 2, when the total phosphatic concentration is low, the citrate soluble phosphatic concentration (C - P₂O₅) becomes low as well. Therefore, when the total phosphatic concentration is low, appropriate additives having high phosphatic content must be added.

**[Table 1]**

| Principal Component of Raw Material Incinerated Ash | | | | | |
|---|---|---|---|---|---|
| Raw Material Incinerated Ash | Principal Component (%) | | | | |
| | T-P₂O₅ | T-K₂O | T-CaO | T-MgO | T-SiO₂ |
| T-P₂O₅ Incinerated ash having the highest concentration | 30.9 | 2.8 | 12.6 | 4.0 | 25.1 |
| T-P₂O₅ Incinerated ash having the lowest concentration | 22.8 | 1.9 | 10.9 | 3.8 | 31.8 |
| T-P₂O₅ Incinerated ash having average concentration | 26.7 | 2.3 | 11.8 | 4.2 | 27.7 |

**[Table 2]**

| Assumed Product Composition | | | | |
|---|---|---|---|---|
| Raw Material Incinerated Ash | Component of Fertilizer (%) | | | |
| | C-P₂O₅ | C-K₂O | C-MgO | C-SiO₂ |
| T-P₂O₅ Incinerated ash having the highest concentration | 19.3 | 1.9 | 19.2 | 17.2 |
| T-P₂O₅ Incinerated ash having the lowest concentration | 15.8 | 1.5 | 15.7 | 24.6 |
| T-P₂O₅ Incinerated ash having average concentration | 17.7 | 1.6 | 17.5 | 20.1 |

Tables 3 and 4 indicate composition of incinerated ash (table 3) and an analysis of the effective fertilizer component of a product (table 4) when preparing the product by using raw material incinerated ash that contains principal components similar to those of the incinerated ash having the lowest concentration of the total phosphoric acid. Table 4 indicates that a product prepared by adding calcium phosphate to raw material of incinerated ash having low phosphoric concentration has a citrate soluble phosphatic concentration of 19.8%. As shown in table 2, when incinerated ash having the highest concentration of the total phosphoric acid is used as raw material, the assumed citrate soluble phosphatic concentration of the product would be 19.3%. From those results, it has been proven that even when incinerated ash having low total phosphatic concentration is used as raw material, a product having a citrate soluble phosphatic concentration similar to that of incinerated ash containing high total phosphatic concentration can be prepared by adding additives containing high phosphatic content materials (resources). Namely, the dumped materials were melted at a temperature between 1350°C and 1450°C in a furnace. If a temperature is lower than 1350°C, the degree of smelting is insufficient, while if it is over 1450°C, loss of phosphate or other active ingredients becomes significant.

**[Table 3]**

| Principal Component of Raw Material Incinerated Ash | | | | | |
|---|---|---|---|---|---|
| Raw Material Incinerated Ash | Principal Component (%) | | | | |
| | T-P₂O₅ | T-K₂O | T-CaO | T-MgO | T-SiO₂ |
| Incinerated Ash + Calcium Phosphate | 22.3 | 2.5 | 13.1 | 2.6 | 27.5 |
| T-P₂O₅ Incinerated ash having the lowest concentration | 22.8 | 1.9 | 10.9 | 3.6 | 31.9 |

**[Table 4]**

| Composition of Product | |
|---|---|
| Raw Material Incinerated Ash | Component of Fertilizer |
| | C-P₂O₅ |
| | (%) |
| Incinerated Ash + Calcium Phosphate | 19.8 |
| T-P₂O₅ Incinerated ash having the lowest concentration | 15.8 |

### 3. Selection of Incinerated Ash and High Phosphatic Resources to be Added, and Determination of Addition Percentage

In order to select high phosphatic resources to be added and to determine a proper addition percentage, the results of producing a product by adding any of calcium phosphate {Ca₃(PO₄)₂}, phosphate rock, and meat and bone meal incinerated ash as high phosphatic resources to a plurality of sludge incinerated ash having different content of the total phosphatic concentration are explained hereinafter. Table 5 indicates principal components of raw materials of incinerated ash (A) to (D) used as samples and calcium phosphate {Ca₃(PO₄)₂}, phosphate rock, and meat and bone meal incinerated ash that can be used as high phosphatic resources. In table 5, incinerated ash A is the one which has the lowest total phosphatic concentration (see table 2) while incinerated ashes B to D are those which have even lower total phosphatic concentration than incinerated ash A.

**[Table 5]**

| Principal Component of Raw Material Incinerated Ash | | | | | |
|---|---|---|---|---|---|
| Name of Raw Material | Principal Component (%) | | | | |
| | T-P₂O₅ | T-K₂O | T - CaO | T - MgO | T-SiO₂ |
| Incinerated Ash A | 22.8 | 1.9 | 10.9 | 3.8 | 31.9 |
| Incinerated Ash A | 16.0 | 2.2 | 10.6 | 3.2 | 37.2 |
| Incinerated Ash A | 19.4 | 1.8 | 9.3 | 2.7 | 33.1 |
| Incinerated Ash A | 14.0 | 2.1 | 11.1 | 3.5 | 43.1 |
| Medicine: Ca₃(PO₄)₂ | 41.6 | | 58.1 | | |
| Phosphate Rock | 32.9 | 0.1 | 55.6 | 0.3 | 3.2 |
| Meat and Bone Meal Incinerated Ash | 36.1 | 1.8 | 49.7 | 1.3 | 2.0 |

Table 6 indicates a mixing ratio of samples 1 - 6 that are mixed raw materials, in which any of calcium phosphate {Ca₃(PO₄)₂}, phosphate rock, or meat and bone meal incinerated ash is added as high phosphatic resources to raw materials of sludge incinerated ash, and furthermore, magnesium oxide (MgO), and calcium oxide (CaO) are added thereto. Samples 1 to 3 are mixed raw materials to which calcium phosphate were added while sample 4 is a mixed raw material to which phosphate rock was added. Samples 5 and 6 are mixed raw materials to which meat and bone meal incinerated ash was added. The amount of meat and bone meal incinerated ash added to the raw material was greater in sample 5 while the amount of the ash was slightly less in sample 6. Namely, the mixing ration of incinerated ash exceeds 50% in each sample.

**[Table 6]**

| No. | Name of Mixed Raw Materials / Sample Products | Raw Material Mixing Ration (%) | | | | | |
|---|---|---|---|---|---|---|---|
| | | Incinerated ash | Ca₃(PO₄)₂ | Phosphate Rock | Meat and Bone Meal Incinerated Ash | MgO | CaO |
| 1 | A | 52.9 | 17.5 | | | 18.6 | 11.0 |
| 2 | B1 | 71.5 | 10.7 | | | 11.9 | 5.9 |
| 3 | B2 | 62.2 | 18.6 | | | 14.2 | 5.0 |
| 4 | B3 | 58.2 | | 25.3 | | 14.3 | 2.2 |
| 5 | C1 | 51.2 | | | 27.5 | 15.5 | 5.8 |
| 6 | D1 | 64.8 | | | 21.0 | 11.8 | 2.4 |

Table 7 indicates citrate soluble phosphatic concentration (%) of a product when it was prepared from samples 1-6 shown in table 6. In this case, a product was prepared according to a conventional method for producing phosphates comprising steps of heating mixed raw materials in a furnace, separating the resulting mixture into a molten metal and liquid slag, extracting the liquid slag, then quickly cooling the slag: As apparent from table 7, even when meat and bone meal incinerated ash were used as additives, a product having high citrate soluble phosphatic concentration was obtained similar to the case where calcium phosphate or phosphate rock were used as additives.

**[Table 7]**

| Analysis Result of Sample Products | |
|---|---|
| Raw Material Sample Number | Citrate Soluble Phosphatic Concentration (%) |
| 1 | 19.8 |
| 2 | 15.8 |
| 3 | 17.4 |
| 4 | 18.0 |
| 5 | 20.4 |
| 6 | 17.5 |

As apparent from comparison of tables 7 and 4, it has been proven that a product of high citrate soluble phosphatic concentration, which is normally obtained when incinerated ash having high concentration of total phosphoric acid is used as a raw material, can be obtain if incinerated ash having low concentration of total phosphoric acid is used together with high phosphatic content resources. Furthermore, through those experiments, the fact that meat and bone meal incinerated ash can be used as high phosphatic content resources and its addition ratio were discovered.

### 4. Verification of Safety

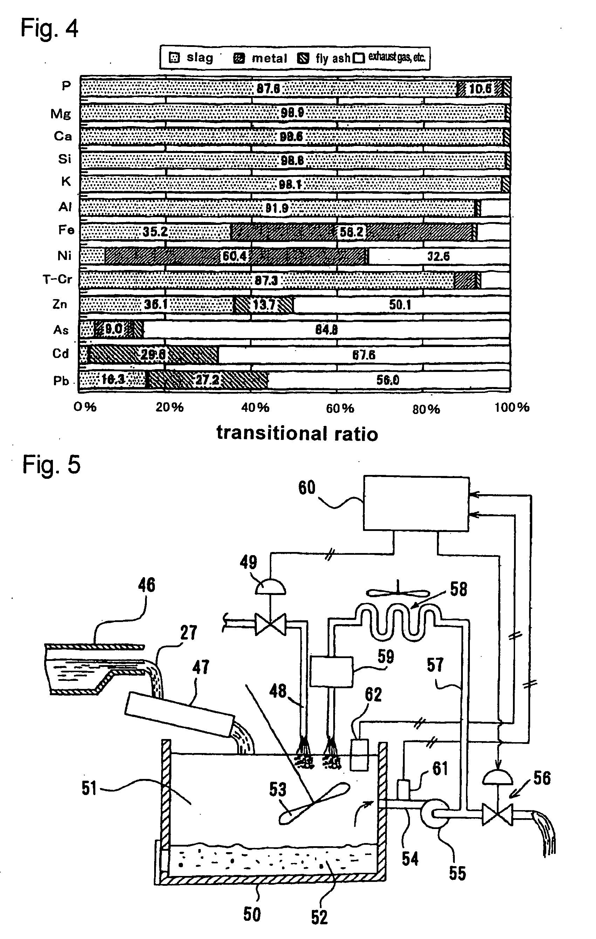

Heavy metal can be present in sewage sludge incinerated ash. Therefore, it is mandatory to confirm that a product contains no heavy metal when phosphates are prepared from incinerated ash. Although patent document 2 includes a description of the safety of the process and the product, we performed the following experiment to verify quantitative safety. Table 8 indicates the mixing ratio of mixed raw materials in which magnesium oxide and calcium oxide (quick lime) were added as additives to incinerated ash obtained from two different treatment plants. Fig. 4 indicates behavior of heavy metal (i.e. conversion ratio of heavy metal constituents before and after the treatment) when processed in a smelting furnace under a reducing atmosphere.

**[Table 8]**

| Mixing Ratio of Raw Materials | | | |
|---|---|---|---|
| Sample | Incinerated Ash | Additives | |
| | | MgO | CaO |
| 1 | 1 | 0.143 | 0.137 |
| 2 | 1 | 0.134 | 0.147 |

As apparent from Fig. 4, the major part of the fertilizer component including phosphoric acid (P), magnesium (M), calcium (Ca), silicon (Si), and potassium (K) has moved to the liquid slag. The mass part of iron (Fe) and nickel (Ni) have been removed as metal. Although aluminium (Al) and chrome (Cr) may remain in the slag, the content of chrome is the same or less than other fertilizers on the market. Furthermore, no harm has been recognized through fertilizing tests on plants and rather shows a favorable result for the growth of plants. In addition, only a small amount is absorbed or transited into a plant body. A majority of heavy metals that can be harmful to a human body, which are zinc (Zn), arsenic (As), cadmium (Cd), and lead (Pb), can be transited to the air and removed from a product. From the aforementioned study, the phosphate product obtained by using incinerated ash is considered safe.

According to the present invention, the content of phosphatic constituents in sludge incinerated ash is measured and high phosphatic resources are added as additives based on the difference of concentration of a target product and the measured result. Therefore, stable phosphates can be produced at low cost. In addition, according to appendix claim 4, wastes such as bone meal can be used as additives of high phosphatic resources. Thereby, the amount of wastes to be treated can be reduced, and manufacturing costs for phosphates can be reduced as well.

### BRIEF DESCRIPTION OF THE DRAWINGS

FIG. 1 is a sectional view illustrating an apparatus for producing phosphates according to the present invention.
FIG. 2 is a block diagram illustrating an apparatus for controlling addition of sub raw materials of Fig. 1.
FIG. 3 is a graph illustrating fluctuation of the composition of principal components in sludge incinerated ash.
FIG. 4 illustrates behavior of heavy metal when processed in a smelting furnace under a reducing atmosphere.
FIG. 5 illustrates arrangement of parts of an apparatus for granulating slag.

### BEST MODE TO CARRY OUT THE INVENTION

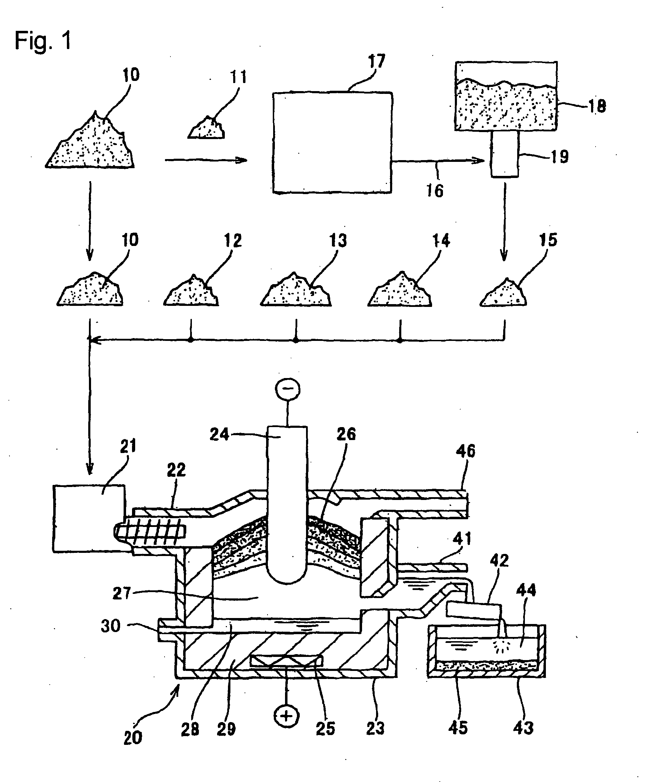

FIG. 1 is a sectional view illustrating an apparatus for producing phosphates according to the present invention. In Fig. 1, an amount of raw material of sludge incinerated ash 10 is taken as a sample 11 to measure the content of its principal components, in particular, the content of the total phosphatic acid (T - P₂O₅). The majority of the incinerated ash 10 is mixed with additives 12 - 15 and dumped into an electrical resistance system smelting furnace 20. Not only magnesium oxide (MgO) 12, calcium oxide (CaO) 13, and wastes containing high phosphatic components such as meat and bone meal incinerated ash 15, but also coke 14 is added as additives for reducing ambient air in the smelting furnace 20. As the amount of magnesium oxide 12 and calcium oxide 13 contained in the incinerated ash is quite stable throughout the year (see Fig. 3), a certain proportion of magnesium oxide 12, calcium oxide 13, and coke 14 is added as additives. Addition of those materials is performed in such a manner, for example, by arranging piping from a hopper of each material along a transportation path.

On the other hand, the content of total phosphatic constituents in sludge incinerated ash varies greatly depending on the season and such variation directly influences the citrate soluble phosphatic concentration. Therefore, the amount of phosphatic components to be added must be controlled to produce a stable phosphate product. Meat and bone meal incinerated ash or the like (hereinafter referred to as "meat and bone meal") is stored in a container 18 as wastes containing high phosphatic components 15. Bone meal, fish meal, poultry manure, or wastes containing bone meal or the like may be used as the wastes containing high phosphatic components 15. A release mechanism 19 is arranged at the bottom of the container 18 to release a predetermined amount of components 15 into a mixture as necessary. Furthermore, an apparatus for controlling addition 17 determines the adding ratio of meat and bone meal required for incinerated ash at the present moment from the analysis of the sample 11 and sends a control signal 16 to the release mechanism 19 for releasing a predetermined amount of meat and bone meal.

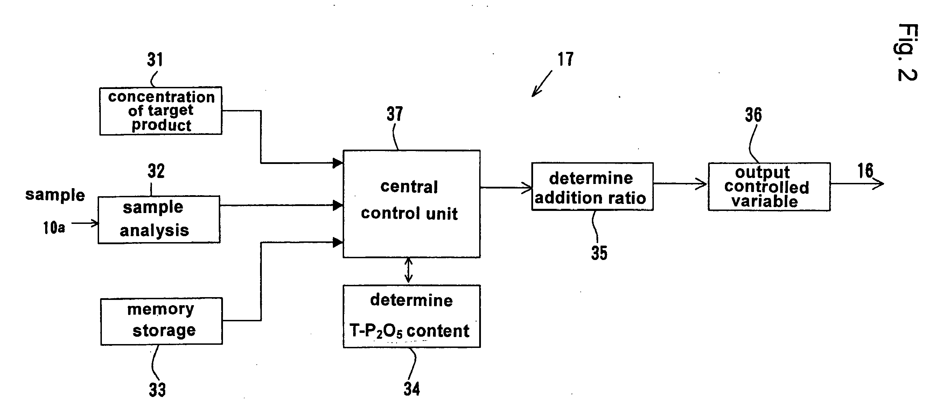

FIG. 2 is a block diagram illustrating the apparatus for controlling addition 17. In Fig. 2, the apparatus 17 comprises a means for inputting the concentration of a target product 31, a means for analyzing a sample 32, data storage 33, a means for determining content of total phosphatic acid 34, a means for determining addition ratio 35, an output of the controlled variable 36, and a central control unit 37.

A means for inputting the concentration of a target product 31 is used to determine the lowest citrate soluble phosphatic concentration of a target product (or total phosphatic concentration required for a target product) based on seasonal fluctuation throughout the year, the trend of demand of the market, the law and regulations (Fertilizer and Manure Control Law), or the like and to input the data. For example, the lowest citrate soluble phosphatic concentration of a target product may be determined by considering the retail price of the product, the total phosphatic concentration of the whole raw materials of the last year, and the price of meat and bone meal so as to make the most profit and to satisfy the requirements of law. A means for analyzing a sample 32 is used to analyze principal components (or only total phosphatic concentration) of a sample 11. Data storage 33 is used to store data relevant to citrate soluble phosphatic concentration and total phosphatic concentration, and other necessary data. A means for determining content of total phosphatic acid 34 is used to determine content of total phosphatic acid of a target product from the aforementioned data and calculate the difference from the total phosphatic concentration of the sample 11. A means for determining addition ratio 35 is used to calculate an addition ratio of meat and bone meal for incinerated ash at present. A means for output the controlled variable 36 is used to determine a controlled variable of the thus obtained ratio, to control the release mechanism 19, and to release a predetermined amount of meat and bone meal.

In Fig. 1, a smelting furnace 20 comprises a raw material dumping machine 21 and a raw material dumping port where raw materials are dumped in the furnace. A furnace body 23 includes a lining 29 adhered to inside of the center part thereof so as to form a melting space. Electrodes 24, 25 are provided at its upper part and lower part, respectively. Dumped raw materials 26 are heated and melted. Melted materials are separated into a liquid slag 27 and a molten metal 28 so as to coexist in the furnace as two separated liquid conditions. The molten metal 28 is discharged from a metal discharge port 30. The liquid slag is discharged from a discharge port 41 and transported to a granulation tank 43 through a stream trough 42. The granulation tank 43 contains water 44 so that the flown liquid slag becomes granulated 45 and accumulated at the bottom of the granulation tank 43. Furthermore, toxic substances such as lead, zinc, arsenic, and cadmium contained in the incinerated ash are evaporated through a gas discharge port 46 mounted on the top of the furnace body 23 so as to be discharged to treatment equipment (not shown).

The aforementioned embodiments are carried out as follows: A predetermined ratio of additives including magnesium oxide 12 and calcium oxide 13 and coke 14 are added to the raw material of incinerated ash 10. In the mean time, a predetermined amount of wastes containing high phosphatic acid or high phosphatic additives to which calcium phosphate or phosphate rock has been added 15 is added according to the ratio determined by an apparatus for controlling addition 17. The mixed raw material to which additives 12 - 15 have been added is dumped into a raw material dumping machine 21 so as to be delivered from a dumping port 22 to the inside of a smelting furnace 20. The mixed raw material dumped into the furnace is heated with electrodes 24, 25 so as to be melted. Once melted, the mixed raw material is separated into a molten slag 27 and a molten metal 28 while gas (not shown) is generated through this melting process. The molten slag 27 and the molten metal 28 remain in the furnace in a separated condition. The thus produced gas is discharged from a gas discharge port 46 to a treatment apparatus (not shown). The molten metal 28 accumulated in the furnace is discharged from a metal discharge port 30. The molten slag 27 is discharged from a slag discharge port 41 and transported into a granulated tank 43 through a stream trough 42 so as to be accumulated on the bottom of the granulated tank 43 as granulated slag 45. The thus obtained granulated slag is taken out and finely crushed to make a product. In general, the crushing process includes sprinkling cooling water of a temperature of 20 - 30°C over slag carried by a conveyor (not shown) or cooling slag by using water in a granulation tank so as to crush slag into fine pieces. However, due to atmosphere temperature and water conservation, an apparatus for granulating slag as shown in Fig. 5 is used, and is processed at a temperature of 40 - 80°C.

FIG. 5 illustrates the arrangement of parts of the apparatus for granulating slag. The melted slag 27 drained from the slag discharge port 46 of the furnace through the stream trough is dumped into a granulation tank 50. A temperature of cooling water (industrial water) 51 in the granulation tank 50 increases constantly due to the high temperature of the molten slag. Thereby, water of a cooler temperature is infused from an infusing pipe 48 to the granulation tank 50 by operating a control valve 49. After mixing inside of the tank with a mixer 53, hot water heated by absorbing heat is discharged through a discharge pipe 54. The discharge pipe 54 is equipped with a pump 55 and a control valve 56 in which a branch pipe 57 is provided at the delivery side of the pump 55. A cooling coil (or a heat exchanger) 58 and a filter 59 is arranged therebetween so that a part of the discharged water returns to the granulation tank 50. A temperature of the cooling water 51 is measured by a thermometer 61 provided at the discharge pipe 54, and the measured value is input to a controller 60. In addition, the water level of the granulation tank 50 is measured by a water gauge 62 and the thus obtained data is also input to the controller 60. The controller 60 is used to control controlling valves 49 and 55 so as to keep a temperature and water level in the granulation tank at the predetermined values by analyzing the data. As a result, a temperature of the cooling water is maintained in a range of 40 - 80°C, for example, in the proximity of 60°C so as to deposit granulated slag 52.

As described above, according to the present invention, there is provided a method and an apparatus for producing phosphates that is safe and stable in quality. When concentration of total phosphatic acid in sludge incinerated ash is low, an appropriate amount of wastes containing high phosphatic constituents is added so that citrate soluble phosphatic concentrations in a product is maintained higher than that of a target product throughout the year. In addition, the manufacturing cost is kept low, as waste such as bone meal is used as high phosphatic additives.

Hereinafter, we will explain about a test result of fertilizing response performed on a product according to the present invention.

Phosphates with citrate solubility of 18.63% were applied to *Hiroshimana* (vegetables used for pickles in Japan) and a test for fertilizing response was conducted using Wagner Pots (a/5000) of 0.02m². Experimental plots were divided into 5 plots, that is, non-phosphate plot where no phosphates were applied, a standard plot where the product was applied, a double dose plot where the product was applied double, a comparison standard plot where comparison fertilizer was applied, and a comparison double plot segment where the comparison fertilizer was applied double. Three pots were provided for each segment. The soil used was chernozem and 0.7 g of ammonium sulfate and potassium chloride was applied to all of the plots as a component amount (N and K₂O). A commercial fertilizer (citrate solubility P₂O₅: 19.96%) was applied to the comparison plots as prescribed and 0.7 g of phosphatic acid (P₂O₅) of the product of the present invention was applied to the plot. The plants were farmed for 27 days in a greenhouse. The plant of the plot to which phosphates from the present invention were applied grew better than that of the non-phosphate plot and similar to those of the comparison plots. The yield index was determined based on the value of 100 which is the fresh weight of the plants after harvest using comparison fertilizer. The absorption index was determined based on the value of 100 which is the amount of P₂O₅ in the plants using comparison fertilizer. The plant to which the phosphates from the present invention were applied showed obviously higher values in both yield index and absorption index of P₂O₅ compared with the plant grown in the non-phosphate plot. The plant to which the phosphates of the present invention were applied also presented values similar to the plants to which commercial fertilizer was applied in both yield index and absorption index of P₂O₅.

Since numerous modifications and variations will readily occur to those skilled in the art, it is not desired to limit the invention to the exact construction and operation illustrated and described, and accordingly, all suitable modifications and equivalents may be resorted to, falling within the scope of the invention. While the foregoing invention has been described in detail by way of illustration and example of preferred embodiments, numerous modifications and alterations can be made without departing from the scope of the invention.

## Claims

1. A method for producing phosphates comprising steps of:
adding and smelting main materials of incinerated ash containing phosphatic concentrations, sub materials including magnesium, calcium and/or potassium constituents, and reducing agents in a smelting furnace at a temperature of 1350 - 1450°C;
separating the materials into a molten metal layer and a liquid slag layer in the smelting furnace so as to drain the liquid slag, and
quickly cooling the liquid slag to produce phosphates,
wherein the total phosphatic concentration of the main material of incinerated ash has been measured prior to addition of the sub material and the reducing agents so that when the thus measured total phosphatic concentration is lower than a predetermined concentration of a target product, an addition proportion of high phosphatic content material can be determined before the melting process so as to add high phosphate content material to the smelting furnace to produce a product having the citrate soluble phosphatic concentration of 6 - 25%.

2. The method for producing phosphates defined in claim 1, wherein said liquid slag transported from the smelting furnace is crushed finely while cooled rapidly with water of a temperature of 20 - 30°C.

3. The method for producing phosphates defined in claim 1, wherein said liquid slag transported from the smelting furnace is crushed finely while cooled rapidly with water of a temperature of 40 - 80°C.

4. The method for producing phosphates defined in claim 1, wherein the high phosphate content material comes from phosphatic wastes selected from bone meal, fish meal, and poultry manure or phosphate rock.

5. An apparatus for producing phosphates comprising the steps of adding and melting main materials of incinerated ash containing phosphatic concentrations, sub materials including magnesium, calcium and/or potassium constituents, and reducing agents in an electrical resistance system smelting furnace; separating the materials into a molten metal and a liquid slag in the smelting furnace to drain the liquid slag, and quickly cooling the liquid slag to produce phosphates, said apparatus comprises:
a means for determining concentration of a target product by determining the total phosphatic concentration of the main material incinerated ash prior to addition of the sub materials;
a means for calculating an addition ration of high phosphatic content material;
a container storing high phosphatic content material, and
an apparatus for adding high phosphatic content material to the aforementioned materials before the melting process,
wherein if a total phosphatic concentration of said main materials is lower than a predetermined concentration of a target product input by the input means, said means for determining concentration can obtain the difference of the concentrations so as to determine an addition ratio of the sub materials.

6. The apparatus for producing phosphates defined in claim 5, wherein the high phosphatic content materials are phosphatic wastes selected from bone meal, fish meal, and poultry manure or phosphate rock.

7. The apparatus for producing phosphates defined in claim 5, wherein a lowest citrate soluble phosphatic concentration of a target product is determined based on a seasonal fluctuation throughout the year, the trend of demand in the market, or the like so as to determine the total phosphatic concentration required for the target product.
